(19) Europäisches Patentamt
European Patent Office
Office européen des brevets

(11) **EP 4 617 962 A1**

(12) **EUROPEAN PATENT APPLICATION**

(43) Date of publication:
**17.09.2025 Bulletin 2025/38**

(21) Application number: **24163707.3**

(22) Date of filing: **15.03.2024**

(51) International Patent Classification (IPC):
**G06Q 10/06** (2023.01)    **G06F 40/30** (2020.01)
**G06N 5/04** (2023.01)    **G06N 5/045** (2023.01)
**G06Q 10/0631** (2023.01)    **G06Q 30/0282** (2023.01)
**G06Q 30/0601** (2023.01)

(52) Cooperative Patent Classification (CPC):
**G06Q 10/0631; G06F 40/30; G06N 5/01;
G06N 5/04; G06N 5/045; G06Q 10/06;
G06Q 30/0282; G06Q 30/0631**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Aktiengesellschaft**
**80333 München (DE)**

(72) Inventors:
• **Patsamatla, Harshini Devi**
**Mummidivaram, Andhra Pradesh 533216 (IN)**
• **Sarangi, Sangram**
**Nayagarh, Odisha 752069 (IN)**

(74) Representative: **Isarpatent**
**Patent- und Rechtsanwälte**
**Barth Hassa Peckmann & Partner mbB**
**Friedrichstraße 31**
**80801 München (DE)**

(54) **METHOD AND SYSTEM FOR MANAGING DEVICE SELECTION WITHIN BUSINESS ENVIRONMENT**

(57) Disclosed is a method for managing device selection within a business environment. The method comprises acquiring business data for device-related requirements from one or more stakeholders. The method further comprises conducting a semantic analysis of the business data utilizing a natural language processing (NLP) technique, to generate a first graph representing the device-related requirements in terms of one or more of technical specifications, performance criteria, and device utilization. The method further comprises accessing a second graph based on historical data for multiple devices. The method further comprises executing a node correlation process for matching nodes of the first graph with nodes of the second graph. The method further comprises implementing a decision-making algorithm to select one or more devices based on the matched nodes. The method further comprises generating an output providing the selected one or more devices.

FIG. 6

EP 4 617 962 A1

**Description**

The present invention relates generally to computational systems for device selection and, more specifically, to methods and systems that leverage natural language processing and decision-making algorithms to optimize device selection based on requirements within a business environment.

In computational environments, the process of device selection has traditionally been manual and labour-intensive, involving detailed comparisons of business requirements against a broad spectrum of device capabilities. This approach, while straightforward, has many challenges, including the significant time and resources needed to examine through extensive device specifications and the inherent risk of human error in matching complex technical requirements. In particular, manual processes are not only slow and inefficient but also lack the ability to consistently interpret and align nuanced business needs with the most suitable devices. This gap often leads to suboptimal device selection, which can adversely affect business operations, leading to increased costs and decreased productivity.

To address these challenges, conventional solutions have employed basic automation techniques, utilizing databases of device specifications alongside rudimentary matching algorithms. These conventional solutions aim to streamline the device selection process by reducing the reliance on manual analysis. However, the conventional solutions typically offer limited flexibility and intelligence in handling the diverse and evolving needs of businesses. Thus, the conventional solutions remain inadequate, primarily due to their inability to leverage advanced analytical techniques and real-world performance data effectively. Such limitations prevent these systems from providing personalized, accurate, and contextually relevant device recommendations, thereby failing to meet the dynamic needs of modern businesses.

The present invention seeks to address these shortcomings by automating the analysis of business requirements and device capabilities by incorporating sophisticated algorithms capable of learning from historical data to refine and improve device recommendations over time. The present invention provides an intelligent, efficient, and effective solution for managing device selection in computational environments.

The object of the present invention is achieved by a method for managing device selection within a business environment. The method comprises acquiring business data for device-related requirements from one or more stakeholders in the business environment. The method further comprises conducting a semantic analysis of the business data utilizing a natural language processing (NLP) technique, to generate a first graph representing the device-related requirements in terms of one or more of technical specifications, performance criteria, and device utilization. The method further comprises accessing a second graph based on historical data for one or more of technical parameters, performance analytics, and project-specific usage for multiple devices. The method further comprises executing a node correlation process for matching nodes of the first graph with nodes of the second graph, with each node representing distinct device features. The method further comprises implementing a decision-making algorithm, utilizing a decision tree representative of the device-related requirements, to select one or more devices based on the matched nodes. The method further comprises generating an output providing the selected one or more devices.

In one or more embodiments, the device-related requirements comprises at least one of types of devices needed, I/O module preferences, security features required, preferred engineering software, industry type, and cost of investment considerations.

In one or more embodiments, conducting the semantic analysis of the business data utilizing the NLP technique involves transforming the business data into domain-specific terminologies, for generation of the first graph representative of the device-related requirements.

In one or more embodiments, the first graph comprises a lookup table generated from customer projects and telemetry data. Herein, the lookup table comprises information about the device features including at least one of device identifier, modules, firmware version, engineering software, and preference indication.

In one or more embodiments, the node correlation process is configured to process nonlinear relationships between the device features and target variables derived from the device-related requirements.

In one or more embodiments, the decision-making algorithm is configured to evaluate the device features against corresponding thresholds defined in the device-related requirements to select the one or more devices aligning with the device-related requirements.

In one or more embodiments, the decision-making algorithm is configured to automatically select one or more primary device features for selection of the one or more devices based on construction process for the decision tree.

In one or more embodiments, the output providing the selected one or more devices comprises a visual representation of the decision tree, for providing interpretable insights into process of the selection of the one or more devices for the stakeholders.

The object of the present invention is also achieved by a system comprising one or more processing units and a memory unit communicatively coupled to the one or more processing units. Herein, the memory unit comprises a device selection module stored in the form of machine-readable instructions executable by the one or more processing units, wherein the device selection module is configured to perform aforementioned method steps for managing device selection within the business environment.

The object of the present invention is further achieved by a computer program product, having machine-readable instructions stored therein, that when executed by the one or more processing units, cause the one or more processing units to perform aforementioned method steps.

Still, other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:

FIG 1    is a flowchart of a method for managing device selection within the business environment, in accordance with one or more embodiments of the present invention;

FIG 2    is a block diagram representation of a system for managing device selection within the business environment, in accordance with one or more embodiments of the present invention;

FIG 3    is an exemplary chart depicting business data for device-related requirements, in accordance with one or more embodiments of the present invention;

FIG 4    is an exemplary decision tree for testing value of a feature against a threshold, in accordance with one or more embodiments of the present invention;

FIG 5A    is an exemplary chart of telemetry data with usage of MLFB number, in accordance with one or more embodiments of the present invention;

FIG 5B    is an exemplary knowledge graph including telemetry data and customer project information, in accordance with one or more embodiments of the present invention; and

FIG 6    is a flowchart of a process for managing device selection within the business environment, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for selection of components in an electrical plant design are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

The present invention provides a method for managing device selection within a business environment. The present method leverages advanced natural language processing and decision-making algorithms to efficiently predict suitable devices for specific business requirements. This approach utilizes a knowledge base constructed from telemetry data and customer projects, reducing the effort and cost associated with device selection during the initial commissioning phase and ensuring alignment with industry standards.

As used herein, the "business environment" refers to aspects that affect a company's operations, including customers, competitors, stakeholders, suppliers, industry trends, regulations, and other external factors. Specifically, in present context, the business environment relates to the computational and technological ecosystem within which a business operates, including its IT infrastructure, software needs, and the hardware devices that support its operations. The term "device" refers to any piece of hardware used within a business's computational environment to perform specific functions. Examples of devices include, but not limited to, servers, routers, switches, workstations, storage systems, I/O modules, and the like. These devices vary widely in terms of capabilities, configurations, and intended uses, from general-purpose computers to specialized equipment designed for specific tasks such as network management, data storage, or security enforcement.

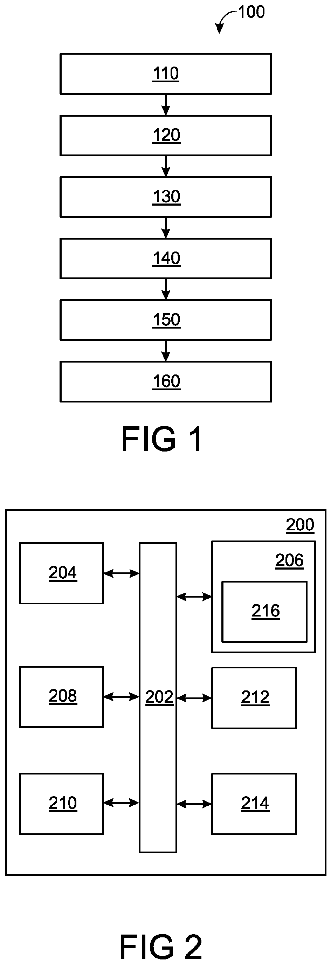

Referring now to FIG 1, illustrated is a flowchart of a method (as represented by reference numeral 100) for managing device selection within the business environment, in accordance with an embodiment of the present invention. The method 100 manages device selection, which is the process of identifying, evaluating, and choosing the most appropriate hardware devices to meet specific business requirements within a given computational environment. The method 100 aims to ensure that selected devices align with the business's objectives, performance expectations, and budget constraints, thereby optimizing the functionality and efficiency of the business's computational infrastructure.

Referring to FIG 2, illustrated is a block diagram of a system 200 for managing device selection within the business environment, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product programmed for digitalizing and analysing the engineering diagram for the industry environment. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes one or more processing units 204 and one or more memory units 206. Herein, the memory unit 206 is communicatively coupled to the processing unit 204. In an example, the memory unit 206 may be embodied as a computer readable medium on which program code sections of a computer program are saved, the program code sections being loadable into and/or executable in a system to make the system 200 execute the steps for performing the said purpose.

Generally, as used herein, the term "processing unit" refers to a computational element that is operable to respond to and processes instructions that drive the system 200. Optionally, the processing unit includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory unit 206 may be volatile memory and/or non-volatile memory. The memory unit 206 may be coupled for communication with the processing unit 204. The processing unit 204 may execute instructions and/or code stored in the memory unit 206. A variety of computer-readable storage media may be stored in and accessed from the memory unit 206. The memory unit 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 204 has connectivity to the bus 202 to execute instructions and process information stored in the memory unit 206. The processing unit 204 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 204 may include one or more microprocessors configured in tandem via the bus 202 to enable independent execution of instructions, pipelining, and multithreading. The processing unit 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that may be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display, a printer, a communication channel, or the like, without any limitations.

In the present system 200, the processing unit 204 and accompanying components have connectivity to the memory unit 206 via the bus 202. The memory unit 206 includes both dynamic memory (e.g., RAM, magnetic disk, writable optical disk, etc.) and static memory (e.g., ROM, CD-ROM, etc.) for storing executable instructions that when executed perform the method steps described herein for managing device selection within the business environment. In particular, the memory unit 206 includes a device selection module 216 to perform steps for the said purpose.

Referring to FIGS 1-2 in combination, various steps of the method 100 (as described hereinafter), which may be executed in the system 200, or specifically in the processing unit 204 of the system 200, for managing device selection within the business environment, are described. It may be appreciated that although the method 100 is illustrated and described as a sequence of steps, it may be contemplated that various embodiments of the method 100 may be performed in any order or different combinations, and need not include all of the illustrated steps.

At step 110, the method 100 includes acquiring business data for device-related requirements from one or more stakeholders in the business environment. This process involves systematically gathering detailed requirements from various business entities, which may include technical specifications, performance expectations, and operational needs specific to the devices being considered for deployment within the business computational infrastructure. Herein, the business data refers to information that specifies what the business needs from its devices, such as processing power, storage capacity, connectivity options, and security features. The stakeholders are individuals or groups within the organization with an interest in the device selection process, including IT professionals, project managers, and end-users. This data collection process aims to capture detailed requirements that may span across different departments, projects, and functions within the business environment.

In present embodiments, the device-related requirements comprises at least one of types of devices needed, I/O module preferences, security features required, preferred engineering software, industry type, and cost of investment considerations. Herein, the "types of devices needed" refers to the specific categories of hardware that the business environment requires. For example, a manufacturing company may need Programmable Logic Controllers (PLCs), Human-Machine Interfaces (HMIs), or Supervisory Control and Data Acquisition (SCADA) systems to automate their processes. "I/O module preferences" includes the various modules that enable a device to interact with other systems and devices, such as communication modules for network connectivity, interface modules for connecting different types of devices, and power supply modules that provide the necessary power requirements for the devices.

"Security features required" addresses the need for devices to have built-in security measures to protect the business's data and operations. This may include hardware with advanced encryption capabilities, secure boot processes, or the ability to integrate with enterprise security systems for continuous monitoring and threat detection. "Preferred engineering software" pertains to the software tools used for designing, programming, and managing the devices within the business environment. This may include specific requirements for compatibility with software. "Industry type" includes the specific sector in which the business operates, such as food and beverage, petroleum, automobile, or printing. Each industry has its own set of standards and requirements that devices must meet to ensure compatibility and compliance. Further, the "cost of investment considerations" involves the budget allocated for the acquisition of new devices. Each of these aspects of device-related requirements allows for creating a detailed and accurate representation of the business need.

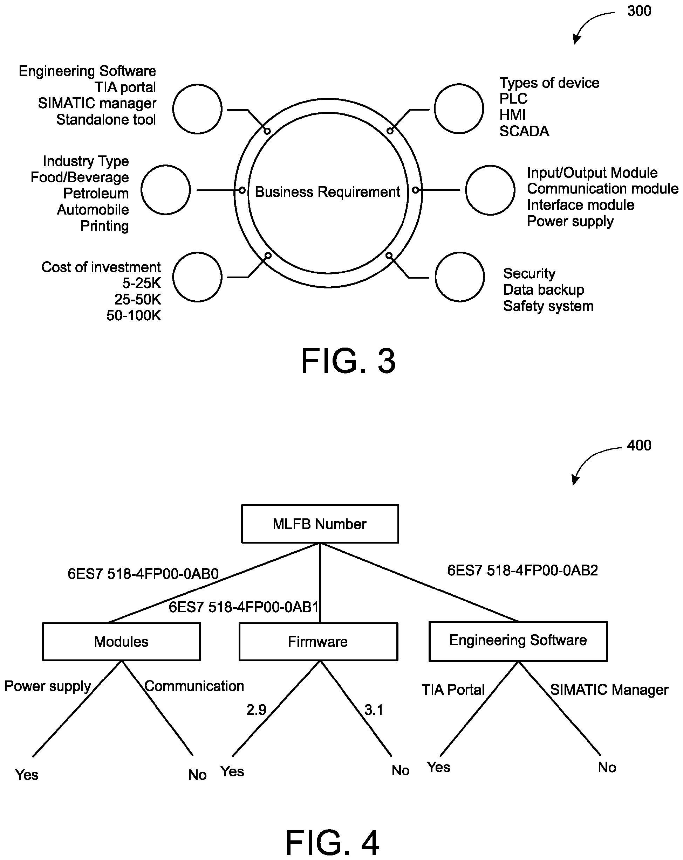

Referring to FIG 3, illustrated is an exemplary diagram depicting the business data for device-related requirements structured as a chart 300. The chart 300 has the "Business Requirement" node, which is interconnected to various categories such as "Engineering Software," "Industry Type," "Cost of Investment," "Types of Device," "Input/Output Module," and "Security." Each category branches out into specific elements, illustrating the multifaceted nature of business requirements. For instance, "Types of Device" further specifies PLC, HMI, and SCADA, which are different forms of control systems used in industrial settings. This visual representation facilitates understanding of the business requirements, for the subsequent device selection process. In an example, the requirement mat be to setup alarm for a food industry boiler which can be engineered with 'XX' portal and monitored with the budget of 'YY'. In the given example, the requirement factors are industry type, engineering software, panel, combined with devices.

At step 120, the method 100 includes conducting a semantic analysis of the business data utilizing a natural language processing (NLP) technique, to generate a first graph representing the device-related requirements in terms of one or more of technical specifications, performance criteria, and device utilization. This involves interpreting and structuring the textual and linguistic information contained within the business requirements. This step translates the often qualitative language of business needs into quantifiable, machine-readable formats. For example, a requirement for "high-speed data processing capabilities" is analysed to understand the specific technical specifications implied, such as processor speed measured in GHz. The NLP technique includes various processes such as tokenization, where text is broken down into words or phrases; part-of-speech tagging, which identifies whether a word is a noun, verb, etc.; and parsing, to analyse the grammatical structure of sentences.

The output of this semantic analysis is the generation of the first graph. The said first graph is a structured representation of the device-related requirements, where each node corresponds to a distinct requirement or specification identified from the business data. For instance, nodes may represent requirements like "minimum 256GB RAM" or "support for virtualization technology." The edges of the said first graph represent the relational or dependency aspects between these requirements, defining how certain specifications may influence or relate to others. The first graph effectively translates the complex and varied language of business needs into a quantifiable and visually interpretable format, facilitating a more precise and efficient device selection process. This methodological approach ensures that the device recommendations are closely aligned with the business needs, optimizing the device selection process in terms of relevance, efficiency, and efficacy. This structured representation facilitates a more systematic and efficient matching process in subsequent steps of the method 100.

In an embodiment, conducting the semantic analysis of the business data utilizing the NLP technique involves transforming the business data into domain-specific terminologies, for generation of the first graph representative of the device-related requirements. The transformation process involves interpreting and converting the business requirements into technical language that is specific to the domain of device selection. For instance, general business requirements such as "high-speed data processing" or "robust data security" are translated into precise technical specifications like "processor speeds of at least 3.5 GHz" or "AES 256-bit encryption capability." Such conversion to domain-specific terminologies ensures that the first graph accurately represents the requirements and in a manner that is directly relatable to the technical attributes of the devices.

In an example implementation, for generation of the first graph, the method 100 may, first, involve processing factors from the gathered customer projects and telemetry data to construct a lookup table. This table comprises elements such as the 'MLFB Number'-a unique identifier for devices-and details pertinent attributes like 'Modules,' 'Firmware Version,' and 'Engineering Software.' Additionally, it includes a preference indicator reflecting whether a particular configuration is favoured in the context of the business requirements.

In present embodiments, the first graph comprises a lookup table generated from customer projects and telemetry data, wherein the lookup table comprises information about the device features including at least one of device identifier, modules, firmware version, engineering software, and preference indication. Herein, the device identifier may include MLFB number, which is typically represented like 6ES7 518-4FP00-0AB0, 6ES7 518-4FP00-0AB1. Below

Table 1 provides an example for such look-up table.

Table 1

| MLFB Number | Modules | Firmware Version | Engineering Software | Preferred? |
|---|---|---|---|---|
| 6ES7 518-4FP00-0AB0 | Power supply | 2.6 | SIMATIC Manager | Yes |
| 6ES7 518-4FP00-0AB0 | Power supply | 1.8 | TIA Portal | Yes |
| 6ES7 518-4FP00-0AB0 | Communication | 2.9 | TIA Portal | Yes |
| 6ES7 518-4FP00-0AB0 | Communication | 3.1 | SIMATIC Manager | No |
| 6ES7 518-4FP00-0AB1 | Communication | 3.1 | SIMATIC Manager | No |
| 6ES7 518-4FP00-0AB1 | Communication | 2.9 | SIMATIC Manager | Yes |
| 6ES7 518-4FP00-0AB2 | Interface | 2.6 | TIA Portal | Yes |
| 6ES7 518-4FP00-0AB2 | Power supply | 1.8 | Standalone Tool | Yes |

(continued)

| MLFB Number | Modules | Firmware Version | Engineering Software | Preferred? |
|---|---|---|---|---|
| 6ES7 518-4FP00-0AB2 | Communication | 2.9 | TIA Portal | Yes |
| 6ES7 518-4FP00-0AB2 | Communication | 3.1 | TIA Portal | No |

For instance, the lookup table may record entries showing different MLFB Numbers associated with features such as a 'Power supply' module, firmware versions '2.6' or '1.8', and compatibility with 'SIMATIC Manager' or 'TIA Portal' engineering software, along with a 'Preferred' status to reflect suitability. This table forms the basis for the subsequent selection process. It may be understood that the challenges may arise, for instance, when the MLFB Number pattern does not correspond to any entry within the table. To address this, the process employs a decision tree, which represents the data in a hierarchical structure, acknowledging all potential paths leading to a conclusive decision. FIG 4 illustrates an exemplary decision tree 400, where each internal node interrogates an attribute or feature, the branches signify the result of that interrogation, and the leaf nodes are where definitive decisions regarding device selection are determined. If features are continuous, internal nodes can test the value of a feature against a threshold.

At step 130, the method 100 includes accessing a second graph based on historical data for one or more of technical parameters, performance analytics, and project-specific usage for multiple devices. This second graph is fundamental to the invention as it provides a historical context against which current business requirements can be evaluated. The historical data, as used herein, includes a variety of technical parameters such as device specifications, operational metrics, and environmental conditions under which the devices were used. Further, the performance analytics include into the effectiveness of devices in past applications, providing insights into reliability, efficiency, and throughput. And, the project-specific usage data includes the contextual deployment of devices, highlighting patterns, preferences, and outcomes of device utilization across different business projects.

The second graph represents an interconnected model that reflects the complex relationships between different data points. For example, it could show how certain types of devices perform across various industry sectors or how firmware versions correlate with device performance metrics. The second graph informs the device selection process about what has been effective in the past, and also aids in predicting future device performance and suitability. The value of the second graph is in its ability to inform the decision-making algorithm, which utilizes the historical context to enhance the selection process. When new business requirements are introduced, the method 100 can quickly assess the relevance and efficacy of potential device choices based on past data. By doing so, the present method 100 ensures that the recommendations are also dynamically informed by data about device performance and usage, leading to more accurate and reliable device recommendations.

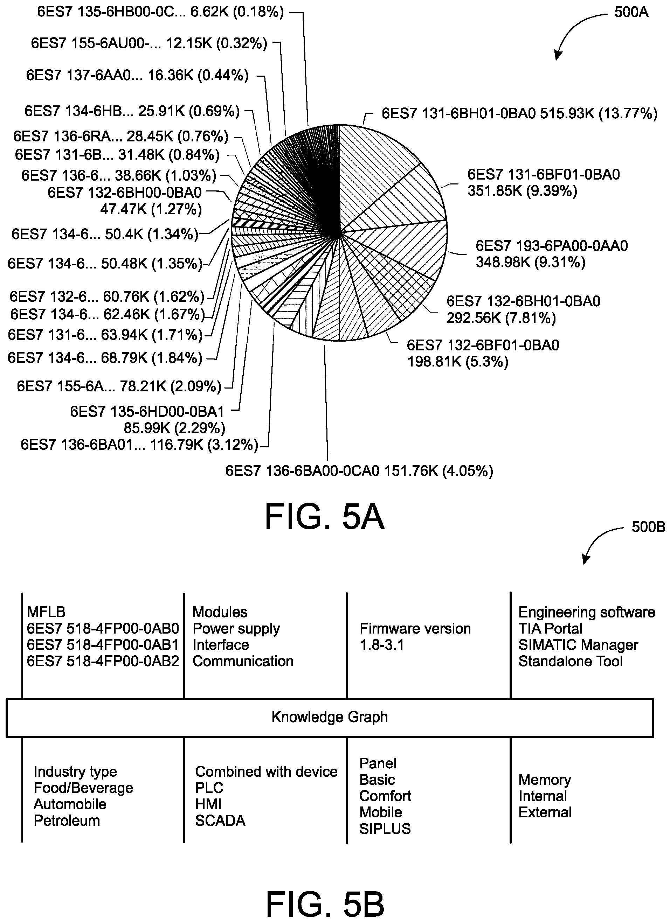

Referring to FIG 5A, illustrated is an exemplary chart 500A of telemetry data with usage of MLFB number. The chart 500A provides a distribution of device usage across the business, highlighting the prevalence of certain MLFB numbers over others. The percentages indicate the proportion of each MLFB number in the operational context, offering valuable insights into device popularity and utilization trends. Referring to FIG 5B, illustrated is an exemplary knowledge graph 500B, which includes the available telemetry data and customer project information. The knowledge graph 500B is structured to illustrate relationships between different categories such as MLFB numbers, modules like power supply and communication, firmware versions, and engineering software types, including TIA Portal and SIMATIC Manager. Additionally, the knowledge graph 500B categorizes the data by industry type and combines it with device specifics such as PLC, HMI, and SCADA systems, as well as memory types. The knowledge graph 500B is used in suggesting preferred devices, as it includes various factors that are considered when aligning devices with customer business requirements.

At step 140, the method 100 includes executing a node correlation process for matching nodes of the first graph with nodes of the second graph, with each node representing distinct device features. This process involves the intricate task of matching the nodes representing device-related requirements from the first graph with corresponding nodes in the second graph. As discussed, the first graph includes the business requirements in domain-specific terminologies, and presents a structured representation of these requirements, where each node represents a required device feature, a specific module preference, or a performance criterion. For example, a node in the first graph may represent the need for a "high-speed network module" or a "security protocol standard." On the other hand, the second graph includes the historical performance of devices in actual business operations, and the nodes in the second graph provide quantifiable and verifiable data points like "average downtime statistics" for a particular device model or "compatibility rating with existing systems."

The node correlation process, therefore, matches the nodes from the first graph with the equivalent or related nodes in the second graph. It may be appreciated that this is not a simple one-to-one matching. The process accounts for the complexities inherent in technical data, and aligns nodes even when the match is not immediately apparent, such as correlating "high-speed network module" from the first graph with a "gigabit ethernet support" node in the second graph, despite the different terminologies used. This systematic approach ensures that the device selection recommendations are grounded in the practical, historical performance of devices, leading to more reliable and effective device selection outcomes.

In an embodiment, the node correlation process is configured to process nonlinear relationships between the device features and target variables derived from the device-related requirements. This configuration allows the process to recognize and appropriately match features from the first graph, which represents the business requirements, with corresponding historical performance data in the second graph. This capability is particularly important for capturing the complex and often non-obvious relationships that exist in real-world data. This approach contrasts with traditional linear analyses, which may oversimplify the relationships and lead to suboptimal device selection. By considering these nonlinear relationships, the present method 100 can predict device suitability and performance more accurately, leading to better decision-making.

In an implementation, the method 100 may capture nonlinear relationships between features and the target variable by performing splits at different levels of the tree. This flexibility allows to handle complex data patterns for device prediction that may not be easily modelled by commissioning engineer analysis. In an example, complete node hierarchy may not fit always with the business requirement, and in such case, sub tree nodes can help in the prediction. For instance, customer projects for alarm in boiler may have 1500 PLC device but as per the business requirement it might not fit due to the cost. Here a 1200 PLC device can be suggested with other factors which would help to do the complete commissioning.

At step 150, the method 100 includes implementing a decision-making algorithm, utilizing a decision tree representative of the device-related requirements, to select one or more devices based on the matched nodes. This process operates by selecting one or more devices based on the matched nodes between the first and second graphs. The decision tree is a predictive model that mirrors a set of decision rules based on the device-related requirements. The decision tree algorithm starts at the root and splits down into branches representing the decision paths, leading to leaf nodes that correspond to the outcome, in this case, the selection of a device. Each internal node of the tree represents a specific device feature derived from the business data, while the branches represent the possible values or conditions that these features can have.

The decision tree algorithm is an artificial intelligence / machine learning (AI/ML) model used for both classification and regression tasks. It is a flowchart-like structure where internal nodes represent features or attributes, branches represent decision rules, and leaf nodes represent the outcome or prediction. This algorithm starts by collecting and preparing dataset with collected client projects and telemetry data. It is ensured that the dataset is clean, formatted properly, and contains the necessary features and target variable. Then, the algorithm involves feature selection, which I includes determining which features are relevant for the problem and selecting them accordingly. Feature selection is important to improve the accuracy and interpretability of the decision tree. Further, the decision tree algorithm recursively partitions the data based on the selected features. It uses metrics like Gini impurity or information gain to determine the best split at each node. The goal is to minimize impurity or maximize information gain to separate the classes or make accurate predictions. The algorithm continues building the tree until certain stop conditions are met. These conditions could be reaching a specified maximum depth, minimum number of samples per leaf, or if further splits do not significantly improve the performance. Once the tree is built, it may be used to make predictions. For classification, each instance follows the decision path down the tree, and the predicted class is the majority class in the leaf node. For regression, the predicted value is the average or median value of the instances in the leaf node

In this process, for calculating the information gain is required. The information gain is a statistical property that measures how well a given attribute separates the training examples according to their target classification. An attribute with low information gain splits the data relatively evenly and as a result doesn't bring the process any closer to a decision; whereas an attribute with high information gain splits the data into groups with an uneven number of positives and negatives and as a result helps in separating the two from each other. The information gain may be defined by a measure commonly used in information theory called entropy that measures the level of impurity in a group of examples. Mathematically, it is defined as:

$$Entropy : \sum_{i=1} -p * log_2(p_i)$$
$$p_i = Probability\,of\,class\,i$$

In an embodiment, the decision-making algorithm is configured to evaluate the device features against corresponding thresholds defined in the device-related requirements to select the one or more devices aligning with the device-related requirements. This process ensures that the selected devices not only meet the minimum criteria set forth by the business needs but are also optimized for the specific use-case scenarios and performance expectations. The decision tree structure of the algorithm allows for a logical, step-by-step evaluation of each requirement and its corresponding device feature, leading to an informed and precise device selection process. By considering these thresholds, the algorithm can also handle cases where multiple devices meet the basic requirements, allowing for further refinement by comparing additional features or performance metrics to determine the best overall fit. In an example, the customer business requirement may include automating boiler operation and monitor the data. In this case the matching tree node can suggest PLC device as a controller and Panel/HMI for monitoring purpose according to the requirement domain data. As a result, the process suggest two devices which would fit to the requirement.

In another embodiment, the decision-making algorithm is configured to automatically select one or more primary device features for selection of the one or more devices based on construction process for the decision tree. This configuration is based on the construction process of the decision tree, which inherently identifies and prioritizes the most significant features that influence the selection of devices. As discussed, the decision tree algorithm operates by recursively partitioning the dataset, using statistical methods to determine the most effective splits based on information gain and impurity measures like Gini index or entropy. During this construction process, certain device features may emerge as more influential in predicting the preferred device outcome, based on their ability to cleanly separate the dataset into subsets that are homogenous in terms of the target variable, which in this context, is the suitability of a device to meet the business requirements. Through this process, the decision-making algorithm is able to narrow down the list of potential devices by focusing on the features that matter most, as determined by the construction process of the decision tree, leading to a more efficient and targeted device selection process.

In an example implementation, the decision tree algorithm may build the knowledge from existing customer data which are designed with multiple factors. Due to this the predicted devices will be preferred one as per the domain. In an example, an existing customer in food and beverages domain using 'XX' PLC device with 'YY' panel. And a different customer using 'ZZ' PLC with extra features. Here if a new customer want for simple operation with low budget where monitoring is optional, then the process can suggest 'XX' PLC which would fix to the business requirement and can handle the required operation because it is already in use for a customer.

At step 160, the method 100 includes generating an output providing the selected one or more devices. That is, upon the successful correlation of nodes between the first and second graphs, the decision-making algorithm proceeds to generate the output. This output is a detailed report of the one or more devices selected as per the established criteria derived from the device-related requirements, by synthesizing the information gathered from the semantic analysis of business data and the historical performance data to recommend devices that are best suited to the business's current and future needs. The output may include, for example, visual representations such as charts or tables, that detail the specifications, capabilities, and benefits of each selected device. The output may also include a breakdown of the devices' features in relation to the business requirements they meet, as well as an explanation of why each device was chosen based on the decision-making algorithm's evaluation criteria.

In an embodiment, the output providing the selected one or more devices comprises a visual representation of the decision tree, for providing interpretable insights into process of the selection of the one or more devices for the stakeholders. This provides stakeholders with interpretable insights into how the one or more devices were selected, allowing for greater transparency and understanding of the decision-making process. The visual representation of the decision tree can detail the structure and the logical flow that led to the final device selection, illustrating the decision points, conditions met, and the path taken through the tree that resulted in the recommendation of specific devices. Each node and branch in the tree represents a decision point or a condition checked against the business requirements, and the leaves represent the end result, i.e., the selected devices.

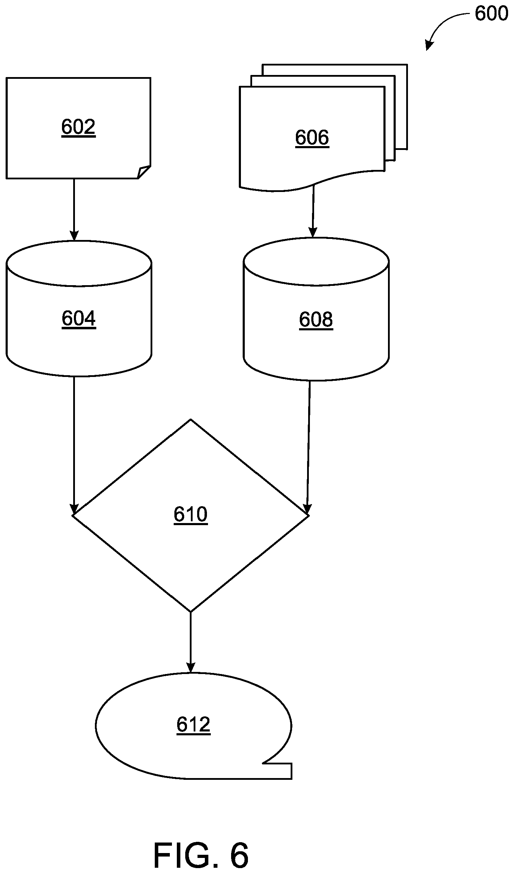

Referring to FIG 6, illustrated is a flowchart of a process 600 for managing device selection within a business environment, in accordance with embodiments of the present invention. At block 602, the process 600 commences with the acquisition of business requirements data and collected customer project data, denoted as the initial inputs to the process. At block 604, the process 600 involves transforming the business requirements data by a natural language processing (NLP) technique to generate a first graph, which visually represents the device-related requirements in terms of technical specifications, performance criteria, and device. At block 606, the process 600 concurrently involves processing the collected customer project data to construct a knowledge graph, including historical device performance and project-specific usage data. At block 608, the process 600 involves a node correlation process, where nodes from the first graph are systematically matched with nodes from the knowledge graph. Each node represents distinct device features and attributes that are utilized for the selection process. At block 610, the process 600 involves the implementation of a decision-making algorithm, which utilizes the information from the matched nodes to select one or more devices that align with the business requirements. This decision-making algorithm is based on a decision tree that evaluates device features against the business requirements. At block 612, the process 600 involves generating an output, which provides the stakeholders with the selected devices, often accompanied by a visual representation of the decision tree to offer interpretable insights into the selection process. This process 600 captures the methodical approach to device selection, ensuring that the recommendations are data-driven, accurate, and tailored to the specific needs of the business environment.

The capability for feature selection is predicated on an algorithmic function that automatically identifies and prioritizes the most significant device features during construction of the decision tree. This selection process evaluates the contribution of each feature to the decision-making process, thereby pinpointing the features that are most critical for the selection of devices. Such a mechanism is essential for identifying the most relevant features for device selection, and also for simplifying the model by reducing dimensionality. Further, in handling the relationships between device features and the target selection criteria, the method 100 is equipped to process nonlinear associations. By executing splits at various levels within the decision tree, the method 100 can adapt to complex data patterns that are indicative of device performance and suitability. This ability is particularly advantageous over traditional linear models, which may not fully capture the intricacies of device specification interactions.

Moreover, the method 100 demonstrates robustness against outliers, which are anomalous data points that could skew the analysis. By making decisions based on the majority rule within each leaf node of the decision tree, the method 100 mitigates the influence of outliers, ensuring that the device selection recommendations are stable and reliable. Furthermore, the method 100 provides a clear, interpretable, and intuitive output of the decision-making process. The decision tree provides a flowchart-like visualization that makes it possible for stakeholders to understand the logic and reasoning behind each device selection. The knowledge graph, representative of the matched nodes and the decision logic, can also be visualized, enhancing its utility as a tool for communication and explanation to all stakeholders involved in the device selection process.

The method 100 of the present invention provides significant advancements over existing solutions by automating and optimizing the device selection process. The method 100 significantly reduces the manual effort and subjectivity associated with device analysis by leveraging a knowledge graph informed by real-time industry data, ensuring that device recommendations are both current and aligned with industry standards. The use of the knowledge graph created from telemetry data and customer projects provides for effort reduction in analysis for devices, ease of project asset and configuration, cost effectiveness, and alignment with industry standard. Further, the use of the decision-making algorithm informed by historical data and current business requirements ensures accurate and reliable device recommendations. This approach enhances efficiency and cost-effectiveness, and also provides businesses with competitive insights and interpretable, explainable rationales for device selection, thus facilitating strategic decision-making.

The method 100 of the present invention uses decision tree mechanism to build up the knowledge graph from customer projects and telemetry data, resulting in deep object analysis and domain utilisation. The knowledge is built with the real time data captured from different industry segments, which helps business outcome and facilitates better decision-making, accurate prediction, resource optimization, competitive advantage, and interpretable and explainable insights. Ultimately, the process evolves into a business cognizance solution, where the commissioning engineering effort reduced with the selection of right device. Such quick assist of device will give benefit at the initial stage of analysis from the business requirement in the marketplace.

The method 100 of the present invention provides multiple advantages to customers, including both operational efficiencies and strategic enhancements. A core benefit is the efficient and cost-effective nature of the device selection process, which streamlines the matching of business requirements to device capabilities, yielding cost savings and reducing time expenditure. Further, the method 100 enables process and resource optimization and automation, reducing the need for manual intervention in selecting devices and thereby minimizing human error. This automation extends to the fine-tuning of factory throughput, where the system's recommendations can lead to enhanced production efficiency. The method 100 can also inform proposals for future digitalization, integrating advanced technologies into the customer's business model. The method 100 also contributes to customer segmentation and targeting by providing tailored device recommendations that align with distinct customer segments' needs, thereby enhancing the precision of marketing and sales strategies.

While the present invention has been described in detail with reference to certain embodiments, it should be appreciated that the present invention is not limited to those embodiments. In view of the present invention, many modifications and variations may be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

Further embodiments:

1. A method for managing device selection within a business environment, the method comprising:

acquiring business data for device-related requirements from one or more stakeholders in the business environment;
conducting a semantic analysis of the business data utilizing a natural language processing (NLP) technique, to generate a first graph representing the device-related requirements in terms of one or more of technical specifications, performance criteria, and device utilization;
accessing a second graph based on historical data for one or more of technical parameters, performance analytics, and project-specific usage for multiple devices;

executing a node correlation process for matching nodes of the first graph with nodes of the second graph, with each node representing distinct device features;

implementing a decision-making algorithm, utilizing a decision tree representative of the device-related requirements, to select one or more devices based on the matched nodes; and

generating an output providing the selected one or more devices.

2. The method of embodiment 1, wherein the device-related requirements comprises at least one of types of devices needed, I/O module preferences, security features required, preferred engineering software, industry type, and cost of investment considerations.

3. The method of embodiment 1, wherein conducting the semantic analysis of the business data utilizing the NLP technique involves transforming the business data into domain-specific terminologies, for generation of the first graph representative of the device-related requirements.

4. The method of embodiment 1, wherein the first graph comprises a lookup table generated from customer projects and telemetry data, wherein the lookup table comprises information about the device features including at least one of device identifier, modules, firmware version, engineering software, and preference indication.

5. The method of embodiment 1, wherein the node correlation process is configured to process nonlinear relationships between the device features and target variables derived from the device-related requirements.

6. The method of embodiment 1, wherein the decision-making algorithm is configured to evaluate the device features against corresponding thresholds defined in the device-related requirements to select the one or more devices aligning with the device-related requirements.

7. The method of embodiment 1, wherein the decision-making algorithm is configured to automatically select one or more primary device features for selection of the one or more devices based on construction process for the decision tree.

8. The method of embodiment 1, wherein the output providing the selected one or more devices comprises a visual representation of the decision tree, for providing interpretable insights into process of the selection of the one or more devices for the stakeholders.

9. A system comprising:

one or more processing units; and

a memory unit communicatively coupled to the one or more processing units, wherein the memory unit comprises a device selection module stored in the form of machine-readable instructions executable by the one or more processing units, wherein the device selection module is configured to perform method steps for managing device selection within the business environment, according to any of the embodiments 1 to 8.

10. A computer-program product having machine-readable instructions stored therein, which when executed by one or more processing units, cause the one or more processing units to perform a method according to any of the embodiments 1 to 8.

Reference Numerals

| | |
|---|---|
| method | 100 |
| step | 110 |
| step | 120 |
| step | 130 |
| step | 140 |
| step | 150 |
| step | 160 |
| system | 200 |

(continued)

| | |
|---|---|
| bus | 202 |
| processing unit | 204 |
| memory unit | 206 |
| interface | 208 |
| database | 210 |
| input device | 212 |
| output device | 214 |
| device selection module | 216 |
| chart | 300 |
| decision tree | 400 |
| chart | 500A |
| knowledge graph | 500B |
| process | 600 |
| block | 602 |
| block | 606 |
| block | 606 |
| block | 608 |
| block | 610 |
| block | 612 |

**Claims**

1. A method for managing device selection within a business environment, the method comprising:

   acquiring business data for device-related requirements from one or more stakeholders in the business environment;
   conducting a semantic analysis of the business data utilizing a natural language processing (NLP) technique, to generate a first graph representing the device-related requirements in terms of one or more of technical specifications, performance criteria, and device utilization;
   accessing a second graph based on historical data for one or more of technical parameters, performance analytics, and project-specific usage for multiple devices;
   executing a node correlation process for matching nodes of the first graph with nodes of the second graph, with each node representing distinct device features;
   implementing a decision-making algorithm, utilizing a decision tree representative of the device-related requirements, to select one or more devices based on the matched nodes; and
   generating an output providing the selected one or more devices.

2. The method of claim 1, wherein the device-related requirements comprises at least one of types of devices needed, I/O module preferences, security features required, preferred engineering software, industry type, and cost of investment considerations.

3. The method according to any of the preceding claims, wherein conducting the semantic analysis of the business data utilizing the NLP technique involves transforming the business data into domain-specific terminologies, for generation of the first graph representative of the device-related requirements.

4. The method according to any of the preceding claims, wherein the first graph comprises a lookup table generated from customer projects and telemetry data, wherein the lookup table comprises information about the device features including at least one of device identifier, modules, firmware version, engineering software, and preference indication.

5. The method according to any of the preceding claims, wherein the node correlation process is configured to process nonlinear relationships between the device features and target variables derived from the device-related requirements.

6. The method according to any of the preceding claims, wherein the decision-making algorithm is configured to evaluate the device features against corresponding thresholds defined in the device-related requirements to select the one or more devices aligning with the device-related requirements.

7. The method according to any of the preceding claims, wherein the decision-making algorithm is configured to automatically select one or more primary device features for selection of the one or more devices based on construction process for the decision tree.

8. The method according to any of the preceding claims, wherein the output providing the selected one or more devices comprises a visual representation of the decision tree, for providing interpretable insights into process of the selection of the one or more devices for the stakeholders.

9. A system comprising:

   one or more processing units; and
   a memory unit communicatively coupled to the one or more processing units, wherein the memory unit comprises a device selection module stored in the form of machine-readable instructions executable by the one or more processing units, wherein the device selection module is configured to perform method steps for managing device selection within the business environment according to any of the claims 1 to 8.

10. A computer-program product having machine-readable instructions stored therein, which when executed by one or more processing units, cause the one or more processing units to perform a method according to any of the claims 1 to 8.

100

| 110 |
|---|

| 120 |
|---|

| 130 |
|---|

| 140 |
|---|

| 150 |
|---|

| 160 |
|---|

# FIG 1

200

| 204 | | 206 |
|---|---|---|
| | 202 | 216 |
| 208 | | 212 |
| 210 | | 214 |

# FIG 2

300

Engineering Software
TIA portal
SIMATIC manager
Standalone tool

Types of device
PLC
HMI
SCADA

Industry Type
Food/Beverage
Petroleum
Automobile
Printing

Business Requirement

Input/Output Module
Communication module
Interface module
Power supply

Cost of investment
5-25K
25-50K
50-100K

Security
Data backup
Safety system

## FIG. 3

400

MLFB Number

6ES7 518-4FP00-0AB0

6ES7 518-4FP00-0AB1

6ES7 518-4FP00-0AB2

Modules

Firmware

Engineering Software

Power supply    Communication

2.9    3.1

TIA Portal    SIMATIC Manager

Yes    No    Yes    No    Yes    No

## FIG. 4

6ES7 135-6HB00-0C... 6.62K (0.18%)

6ES7 155-6AU00-... 12.15K (0.32%)

6ES7 137-6AA0... 16.36K (0.44%)

6ES7 134-6HB... 25.91K (0.69%)

6ES7 136-6RA... 28.45K (0.76%)
6ES7 131-6B... 31.48K (0.84%)

6ES7 136-6... 38.66K (1.03%)
6ES7 132-6BH00-0BA0
47.47K (1.27%)

6ES7 134-6... 50.4K (1.34%)

6ES7 134-6... 50.48K (1.35%)

6ES7 132-6... 60.76K (1.62%)
6ES7 134-6... 62.46K (1.67%)
6ES7 131-6... 63.94K (1.71%)
6ES7 134-6... 68.79K (1.84%)

6ES7 155-6A... 78.21K (2.09%)

6ES7 135-6HD00-0BA1
85.99K (2.29%)
6ES7 136-6BA01... 116.79K (3.12%)

500A

6ES7 131-6BH01-0BA0 515.93K (13.77%)

6ES7 131-6BF01-0BA0
351.85K (9.39%)

6ES7 193-6PA00-0AA0
348.98K (9.31%)

6ES7 132-6BH01-0BA0
292.56K (7.81%)

6ES7 132-6BF01-0BA0
198.81K (5.3%)

6ES7 136-6BA00-0CA0 151.76K (4.05%)

## FIG. 5A

500B

| MFLB<br>6ES7 518-4FP00-0AB0<br>6ES7 518-4FP00-0AB1<br>6ES7 518-4FP00-0AB2 | Modules<br>Power supply<br>Interface<br>Communication | Firmware version<br>1.8-3.1 | Engineering software<br>TIA Portal<br>SIMATIC Manager<br>Standalone Tool |
|---|---|---|---|
| Knowledge Graph | | | |
| Industry type<br>Food/Beverage<br>Automobile<br>Petroleum | Combined with device<br>PLC<br>HMI<br>SCADA | Panel<br>Basic<br>Comfort<br>Mobile<br>SIPLUS | Memory<br>Internal<br>External |

## FIG. 5B

600

602

606

604

608

610

612

FIG. 6

Europäisches
Patentamt
European
Patent Office
Office européen
des brevets

## EUROPEAN SEARCH REPORT

**Application Number**

EP 24 16 3707

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/200084 A1 (DE AGUIAR MURILO GONCALVES [BR] ET AL) 13 July 2017 (2017-07-13) * abstract * * paragraph [0001] * * paragraph [0016] - paragraph [0019] * * paragraph [0020] - paragraph [0040] * * paragraph [0042] * * paragraph [0045] - paragraph [0047] * * paragraph [0052] * * claim 1 * * figures 1,2 * ----- | 1-10 | INV. G06Q10/06 G06F40/30 G06N5/04 G06N5/045 G06Q10/0631 G06Q30/0282 G06Q30/0601 |

**TECHNICAL FIELDS SEARCHED (IPC)**

G06Q
G06N
G06F

The present search report has been drawn up for all claims

| Place of search | Date of completion of the search | Examiner |
|---|---|---|
| Munich | 9 September 2024 | Härdeman, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 3707

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2024

| Patent document cited in search report | Publication date | Patent family member(s) | Publication date |
|---|---|---|---|
| US 2017200084 A1 | 13-07-2017 | NONE | |

EPO FORM P0459

For more details about this annex : see Official Journal of the European Patent Office, No. 12/82